# EUROPÄISCHE PATENTSCHRIFT

(11) **EP 2 962 945 B1**
(45) Veröffentlichungstag und Bekanntmachung des Hinweises auf die Patenterteilung: **12.04.2017**
(21) Anmeldenummer: 15171631.3
(22) Anmeldetag: 11.06.2015
(51) Int. Cl.: B65B 35/18, B65G 15/58

(54) **EINRICHTUNG ZUR LÜCKENLOSEN ÜBERGABE VON UNBEFÜLLTEN TUBEN AUF EIN TRANSPORTBAND**
DEVICE FOR THE GAP-FREE TRANSFER OF UNFILLED TUBES TO A CONVEYOR BELT
DISPOSITIF DE TRANSFERT COMPLET DE TUBES VIDES SUR UNE BANDE DE TRANSPORT

(30) Priorität: 02.07.2014 CH 10062014
(43) Veröffentlichungstag der Anmeldung: 06.01.2016
(73) Patentinhaber: Texa AG, 7023 Haldenstein (CH)
(72) Erfinder: Benz, Gottlieb, 8890 Flums (CH)
(74) Vertreter: Wagner, Kilian

(56) Entgegenhaltungen:
- EP-A1- 0 594 917
- EP-A2- 1 770 029
- US-A- 3 262 243

## Beschreibung

### Technisches Gebiet

Die vorliegende Erfindung betrifft eine Übergabeeinrichtung zur lückenlosen Übergabe länglicher, mindestens annähernd hohlzylindrischer Produkteinheiten, nämlich dünnwandige, unbefüllte Tuben, auf ein Transportband einer Abpackmaschine.

### Technischer Hintergrund

Vorrichtungen, die dazu dienen, Produkteinheiten zu Produktgruppen zu gruppieren und in Schachteln abzupacken, sind in vielen Ausführungsformen bekannt. Das verfahrensgemässe Vorgehen ebenso wie eine entsprechende Vorrichtung, um ein solches Verfahren durchzuführen, sind jeweils von der Art der Produkteinheiten stark abhängig. Insbesondere dünnwandige, unbefüllte Tuben sind sehr druckempfindlich, was eine Förderung vereinzelter Produkteinheiten erfordert und dabei die Möglichkeiten zur effiziente Übergabe einschränkt. Bereits geringfügige Deformationen sind nicht tolerierbar. Daher sind beispielsweise Verfahren mit Stauströmen oder Verfahren bei denen die Produkteinheiten geordnet oder ungeordnet in Reservoirs aufeinanderliegen nicht anwendbar.

Die vorliegende Erfindung liegt im technischen Bereich des Fördern und Abpacken länglicher, mindestens annähernd hohlzylindrischer Produkteinheiten, nämlich dünnwandiger, unbefüllter Tuben, wie es beispielsweise in EP1114784 beschrieben ist. Insbesondere betrifft die Erfindung die Übergabe solcher Produkteinheiten, die von einer Produktionslinie angeliefert werden, auf ein Transportband einer Abpackmaschine. Zum Abpacken müssen die Produkteinheiten lückenlos auf dem Transportband platziert werden, um dann Produktgruppen bilden zu können.

Bei EP1114784 werden Produkteinheiten, die von einer Produktionslinie kommen, in Fördergondeln abgegeben. In diesen werden die Produkteinheiten mittels einer Fördereinheit im Bereich einer Übergabestrecke gefördert. Hier werden die Fördergondeln umgekippt und die Produkteinheiten auf einer in der Länge beziehungsweise Grösse variablen Ablagefläche abgelegt. Die Ablagefläche wird mittels einem beweglichen Mitnehmer rückartig zurückbewegt, so dass die Produkteinheiten in Produktaufnahmen eines Transportbands fallen. Ist eine Produktgruppe vollständig gebildet, wird sie in die Abschiebeposition gefördert und eine nächste Produktgruppe wird gebildet. Während der Übergabe der Produkteinheiten für eine Produktgruppe steht das Transportband still.

EP1394081 beschreibt eine recht komplizierte Vorrichtung zur Übernahme von Hülsen oder Tuben von einer Produktionslinie, die einen wegen Ausschuss diskontinuierlichen Ausstoss von Tuben oder Hülsen haben. Die nachfolgende Packmaschine benötigt jedoch eine kontinuierliche, lückenlose Zufuhr der Hülsen oder Tuben. Die Vorrichtung aus EP1394081 umfasst einen Kettenförderer mit einer Förderstrecke. Die Förderstrecke, welche die entsprechenden Übergabestrecken der Produktionsmaschine bzw. der Packmaschine überlappt, ist auf einen Wagen gelagert und ist in Förderrichtung vor- und zurückbewegbar. Hierdurch wird erreicht, dass der Kettenförderer im Moment der Übergabe der Tuben oder Hülsen von der Produktionsmaschine an die Übernahmevorrichtung scheinbar still steht.

Bei der gattungsgemäßen Vorrichtung gemäss EP0594917 werden schrittweise auf einem Förderer bewegbare Schlitten mit Produktaufnahmen an einer Übergabestelle beladen. An der Übergabestelle ist die Übergabestrecke der anliefernden Förderers und des Schlittenförderers in Förderrichtung nach oben geneigt. Die angelieferten Produkteinheiten werden entlang einem zwischen den Förderern angeordneten Produktführung in Form eines Leitblechs geführt und am Ende des Leitblechs jeweils in Produktaufnahmen des schrittweise vorwärtsbewegten Schlittens übergeben. Die aus EP0774414 bekannte Übergabeeinrichtung arbeitet auf ähnliche Weise, wobei jedoch die beiden Förderer im Übergabebereich nicht parallel verlaufen.

Aus der EP 1 770 029 A2 ist es bekannt, Produkteinheiten mit Vakuum zu beaufschlagen.

### Darstellung der Erfindung

Es hat sich nun gezeigt, dass bei den bekannten Übergabeeinrichtungen insbesondere für kleine, leichte Kunststoff- oder Aluminiumtuben die maximale Übergabegeschwindigkeiten stark begrenzt sind. Übliche Übergabegeschwindigkeiten resp. Übergaberaten liegen bei rund 150 Einheiten pro Minute. Bei höheren Übergabegeschwindigkeiten von 200 Einheiten pro Minute oder darüber neigen die Tuben bei der Übergabe aus den Produktaufnahmen zu springen. Dieser Effekt kann insbesondere durch mögliche elektrostatische Aufladungen bei Kunststofftuben erheblich erhöht sein. Zudem ist bei sehr hohen Übergabegeschwindigkeiten resp. Übergaberaten von ca. 300 Tuben pro Minute oder mehr ein Abrollen über ein Leitblech kaum mehr möglich und die Tuben müssen dann im "freien Flug" resp. "fliegend" in die Produktaufnahme übergeben werden.

Eine Aufgabe der Erfindung ist es, eine Übergabeeinrichtung zur lückenlosen, "fliegenden" Übergabe länglicher, mindestens annähernd hohlzylindrischer Produkteinheiten, in Form von dünnwandigen Tuben, auf eine Transporteinrichtung zur Belieferung einer Abpackeinheit mit lückenlos nebeneinander angeordneten Produkteinheiten anzugeben, mittels welcher die Übergabegeschwindigkeit gegenüber den bekannten Vorrichtungen erheblich erhöht werden kann.

Dies wird mit einer Übergabeeinrichtung nach Anspruch 1 erreicht.

Die Übergabeeinrichtung zur Übergabe länglicher, mindestens annähernd hohlzylindrischer Produkteinheiten in Form von dünnwandigen Tuben auf eine Transporteinrichtung zur Belieferung einer Abpackeinheit mit lückenlos nebeneinander angeordneten Produkteinheiten, umfasst eine mit vorbestimmter, meist konstanter, Geschwindigkeit fördernde Zuführungsvorrichtung zur Zuführung von aus einer Produktionsanlage angelieferten Produkteinheiten und eine Transporteinrichtung mit einem Transportband, welches eine Vielzahl von Produktaufnahmeelementen zur Weiterförderung der Produkteinheiten aufweist. Die Zuführungsvorrichtung weist eine endlos umlaufende Förderkette mit einer Vielzahl von Produktaufnahmebehältern zur Aufnahme von einzelnen aus der Produktionsanlage angelieferten Produkteinheiten auf. Die Förderkette der Zuführungseinrichtung und das Transportband der Transporteinrichtung verlaufen in einem Übergabebereich in die gleiche Förderrichtung gleichmässig ansteigend und distanziert parallel zueinander. Unterhalb der Förderkette ist eine mit einem Ende bis in den Übergabebereich reichende Produktführung angeordnet. Die Übergabeeinrichtung umfasst weiter eine Übergabesteuerungseinheit, welche derart konfiguriert ist, dass sie die Geschwindigkeit des Transportbands an eine vorbestimmte Fördergeschwindigkeit der Zuführungsvorrichtung anpasst, so dass eine zu übergebende Produkteinheit nach der Abgabe am Ende der Produktführung exakt auf dem in Förderrichtung ersten freien Produktaufnahmeelement landet. Die Übergabeeinrichtung umfasst weiter eine Saugeinrichtung zur Herstellung eines Ansaugvakuums, wobei zur Übergabe einer von der Zuführungsvorrichtung angelieferten Produkteinheit auf das Transportband mehrere sich im Übergabebereich der Übergabeeinrichtung befindlichen Produktaufnahmeelemente mit dem Ansaugvakuum der Saugeinrichtung bedienbar sind, so dass die zu übergebende Produkteinheit durch das Ansaugvakuum jeweils während der Landung und Weiterförderung im Übergabebereich im Produktaufnahmeelement gehalten und stabilisiert wird.

Der Übergabebereich definiert einen Bereich, welcher sich über mehrere mit Ansaugvakuum bediente Produktaufnahmeelemente erstreckt, wobei die effektive Übergabe der Produkteinheit auf das Transportband, d.h. die Position des jeweiligen Produktaufnahmeelements im Übergabebereich bei der Aufnahme einer Produkteinheit, von der Übergaberate resp. der Zuführungsgeschwindigkeit der Zuführungsvorrichtung abhängt. Bei tiefen Übergaberaten resp. Zuführungsgeschwindigkeiten findet die effektive Übergabe am Anfang des Übergabebereichs statt und ein Ansaugvakuum wäre nicht notwendig, da eine Produkteinheit über ein Abrollbereich an Ende der Produktführung lagegenau und sicher in ein Produktaufnahmeelement abgegeben werden kann. Bei sehr hohen Übergaberaten von über 300 Produkteinheiten pro Minute ist ein solches Abrollen jedoch nicht mehr möglich. Die Produkteinheiten werden dann im "freien Flug" in ein Produktaufnahmeelement abgegeben. In diesem Fall, d.h. bei einer "fliegenden" Übergabe, ist eine exakte Steuerung der Geschwindigkeit in Abhängigkeit der Zuführungsgeschwindigkeit und der Flugbahn der Produkteinheit (Weg von der Abgabe am Ende der Produktführung bis zur Aufnahme im Produktaufnahmeelement) notwendig. Zudem ist ein Ansaugvakuum notwendig, um eine exakte Landung der zu übergebenden Produkteinheit zu gewährleisten und eine "Herausspringen" zu verhindern. Mit der erfindungsgemässen Übergabevorrichtung kann die Übergaberate somit erheblich erhöht werden.

Aus manchen Übergabeeinrichtungen für andersartige Produkteinheiten, z.B. Zigaretten, sind zwar Saugeinrichtung zur Herstellung eines Ansaugvakuums bekannt, diese dienen jedoch dazu, Produkteinheiten aus einem Staustrom-Reservoir zu entnehmen und Weiterzufördern. Eine solche Anwendung des Ansaugvakuums ist beispielsweise aus der Verarbeitung resp. Verpackung von Zigaretten bekannt (vgl. US3262243). Wie bereits vorangehend erwähnt, sind solche Staustrom-Verfahren für druckempfindliche Tuben jedoch nicht anwendbar.

In einigen Ausführungsformen kann die Übergabeeinrichtung einen Produkteinheitendetektor umfassen, der an der Zuführungsvorrichtung in Förderrichtung vor dem Übergabebereich angeordnet ist, um das Vorhandensein einer Produkteinheit in einem Produktaufnahmebehälter festzustellen. Der Produkteinheitendetektor ist weiter mit der Übergabesteuerungseinheit verbunden, um bei Nicht-Vorhandensein einer Produkteinheit die Geschwindigkeit des Transportbands zu reduzieren bis die nächste Produkteinheit angeliefert wird. Weist der Zuführungsstrom Lücken aufgrund aussortierter fehlerhafter Produkteinheiten auf, so werden diese vom Produkteinheitendetektor erfasst und die Fördergeschwindigkeit des Transportbands kann bis zur Zuführung der nächsten Produkteinheit reduziert oder gestoppt werden, um eine lückenlose Übergabe auf das Transportband auch bei ungleichmässiger Zuführung zu gewährleisten.

Erfindungsgemäß weisen die Produktaufnahmeelemente des Transportbands jeweils mindestens eine Ansaugöffnung auf, die jeweils mit dem Ansaugvakuum der Saugeinrichtung bedienbar ist. Vorzugsweise sind mehrere Ansaugöffnungen im Wesentlichen mittig entlang dem Produktaufnahmeelement angeordnet.

Erfindungsgemäß weist das Transportband zwei voneinander beabstandete Endlosbänder auf, auf welchen die Produktaufnahmeelemente befestigt sind, wobei die Ansaugöffnungen der Produktaufnahmeelemente über der Lücke zwischen den beiden Endlosbändern angeordnet sind.

In einigen Ausführungsformen kann die Saugeinrichtung mindestens eine entlang dem Übergabebereich angeordnete Saugöffnung aufweisen, mit welcher die mindestens eine Ansaugöffnung oder die mehreren Ansaugöffnungen der sich im Übergabebereich befindlichen Produktaufnahmeelemente mit Ansaugvakuum bedienbar sind. Die mindestens eine Saugöffnung der Saugeinrichtung kann im Übergabebereich zwischen den beiden Endlosbändern des Transportbands angeordnet sein.

Beim Betrieb der Übergabeeinrichtung werden die Produktaufnahmeelementen im Übergabebereich mit deren Ansaugöffnungen über die Saugöffnung der Saugeinrichtung bewegt und dabei mit dem Ansaugvakuum bedient, bis sie den Übergabebereich in Förderrichtung wieder verlassen. D.h. die Produktaufnahmeelemente sind unabhängig von deren Position im Übergabebereich bei der effektiven Übergabe der Produkteinheit immer mit Ansaugvakuum bedient.

In einigen Ausführungsformen kann die Produktführung am Ende ein an die Produktführung anschliessendes zum Transportband hin geneigten Abrollbereich aufweisen, um bei geringen Übergaberaten eine Abrollen der Produkteinheit in die entsprechende Produktaufnahme zu ermöglichen. Eine solche Übergabeeinrichtung kann dann je nach Bedarf sowohl mit hohen als auch geringen Übergaberaten betrieben werden, was insbesondere beim Anfahren der Vorrichtung von Nutzen ist.

Förderkette und Transportband können jeweils mit Aufnahmen resp. Behältern versehene Bänder oder Ketten sein. Es werden für die vorliegende Erfindung lediglich zum einfacheren Verständnis zwei unterschiedliche Begriffe verwendet. Die Aufnahme bzw. Behälter müssen den Durchmessern der Tuben angepasst sein und entsprechend sind die Förderketten bzw. Transportbänder mit daran befestigten Behältern bzw. Aufnahmen insgesamt auswechselbar.

### Kurze Erläuterung zu den Figuren

Die Erfindung soll nachfolgend anhand von Ausführungsbeispielen im Zusammenhang mit der Zeichnung näher erläutert werden. Es zeigen:
- Fig. 1: eine perspektivische Ansicht eines Ausschnitts einer Übergabeeinrichtung;
- Fig. 2: eine perspektivischen Ansicht eines Ausschnitts der Übergabeeinrichtung aus Fig. 1;
- Fig. 3: eine Seitenansicht auf den Übergabebereich der Übergabeeinrichtung aus Fig. 1;
- Fig. 4: eine perspektivische Ansicht auf Saugeinrichtung der Übergabeeinrichtung aus Fig. 1; und
- Fig. 5: eine perspektivische Ansicht auf das Transportband und die Saugeinrichtung der Übergabeeinrichtung aus Fig. 1 ohne Zuführungsvorrichtung.

### Wege zur Ausführung der Erfindung

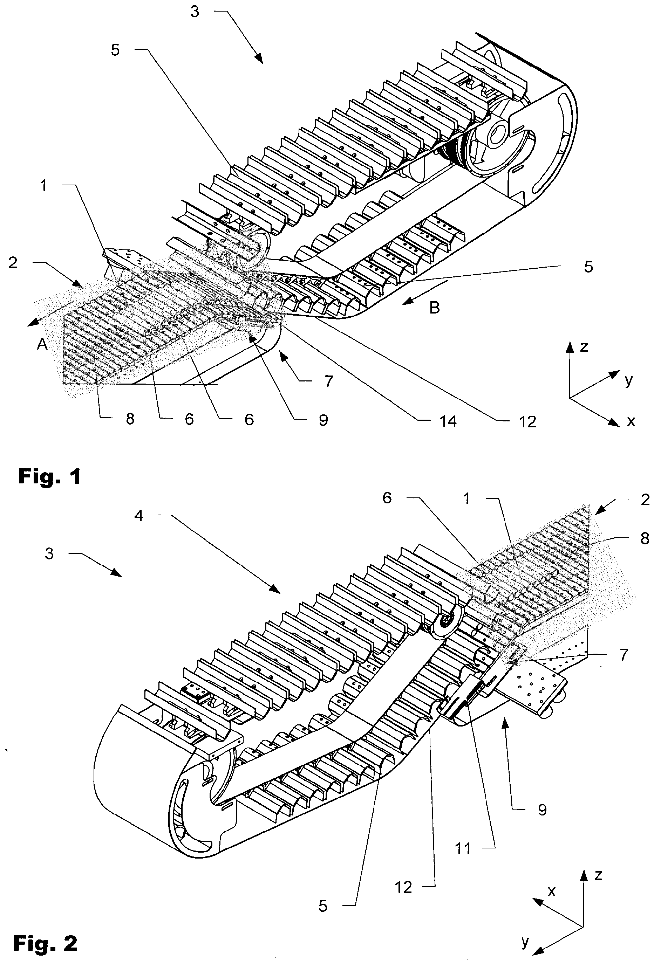

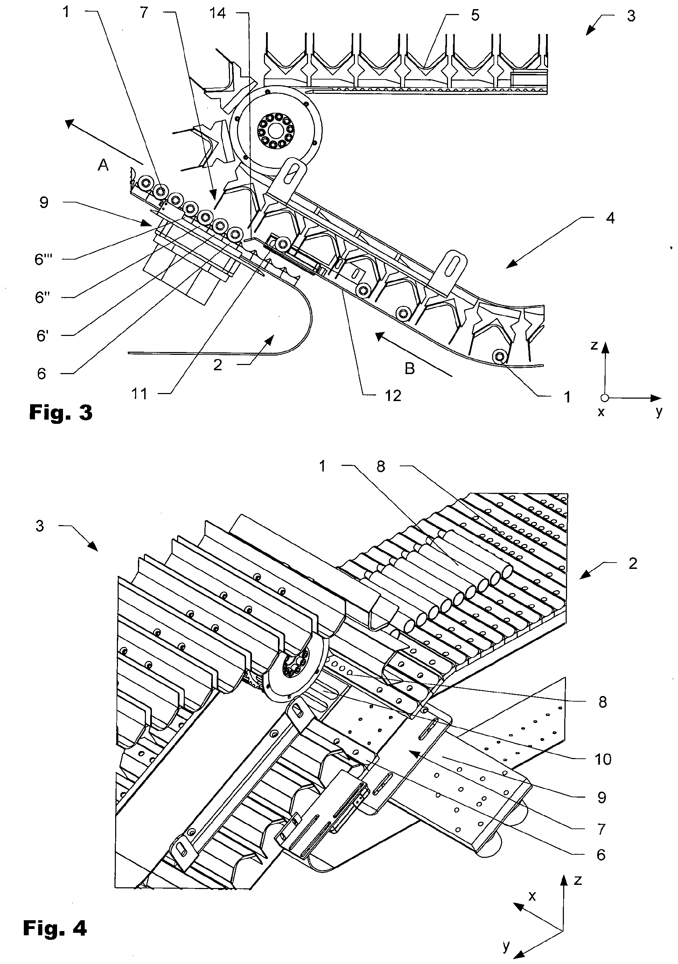

**Fig. 1** und **Fig. 2** zeigen jeweils eine perspektivische Ansicht auf eine Übergabeeinrichtung zur lückenlosen Übergabe länglicher, mindestens annähernd hohlzylindrischer Produkteinheiten 1 auf ein Transportband 2. Bei der gezeigten Übergabeeinrichtung sind als Produkteinheiten leere Tuben dargestellt. **Fig. 3** **zeigt** eine Seitenansicht auf den Übergabebereich 7 der Übergabeeinrichtung aus den Figuren 1 und 2. Die Figuren sind vereinfachte Darstellungen in denen gewisse Teile der Übersicht halber weggelassen wurden. Auch sind Transportband 2 und Förderkette 4 nicht vollständig mit Produktaufnahmeelemente 6 resp. Produktaufnahmebehälter 5 bestückt gezeigt.

Die Übergabeeinrichtung umfasst eine Zuführungsvorrichtung 3 mit einer endlos umlaufenden Förderkette 4, auf welcher aufgrund der druckempfindlichen Tuben mehrere Produktaufnahmebehälter 5 oder Produktaufnahmeschalen angeordnet sind. Dabei wird pro Produktaufnahmebehälter jeweils eine separate Produkteinheit zugeführt. Die Produktaufnahmebehälter 5 sind so ausgerichtet, dass die Tuben 1 separat in Längsrichtung nebeneinander in jeweils benachbarten Produktaufnahmebehältern liegen, wobei Lücken durch ausgesonderte Tuben vorkommen können. Weiter umfasst die Übergabeeinrichtung ein Transportband 2 mit einer Vielzahl von Produktaufnahmeelementen 6 zur Aufnahme der von der Zuführungsvorrichtung 3 angelieferten Tuben 1.

Im Übergabebereich 7 verlaufen die Förderkette 4 und das Transportband 2 in die gleiche Förderrichtung A, B gleichmässig ansteigend und distanziert parallel zueinander, wobei die Förderkette 4 über dem Transportband 2 angeordnet ist, so dass die Tuben 1 mittels Schwerkraft auf das Transportband 2 übergeben werden können. Unterhalb der Förderkette 4 ist eine Produktführung z.B. in Form eines Führungsblechs 12 vorgesehen, auf welchem die Produkteinheit 1 mittels dem Produktaufnahmebehälter 5 zum Übergabebereich hin befördert wird. Am Ende des Führungsblechs 12 ist ein zum Transportband 2 hin abgewinkeltn Abrollbereich 14, z.B. in Form eines Abrollblechs, vorhanden. Der gleichmässige Anstieg der Förderkette 4 resp. des Führungsblechs 12, beispielsweise mit einem Steigungswinkel von ca. 30 Prozent, dient einerseits der Positionierung der Tube 1 im Produktaufnahmebehälter 5 und andererseits wird so die Flugbahn der Tube 1 bei der Übergabe auf das Transportband 2 verkürzt. Auf diese Weise werden Flugbahn-bedingte Positionierungsfehler vermieden.

Bei der gezeigten Übergabeeinrichtung sind die einzelnen Produktaufnahmeelemente 5 wannenförmig mit hochgezogenen Wänden ausgestaltet. und ermöglichen so die Aufnahme von Produkteinheiten 1 mit unterschiedlichen Durchmessern. Vor der Übergabe der Tube 1 wird diese mittels der hinteren Wandung des Produktaufnahmeelements 5 auf dem Führungsblech 12 zum Übergabebereich 7 gefördert. Die einzelnen Produktaufnahmeelemente 6 des Transportbands 2 sind mit einer wannenförmigen Aufnahme ausgestaltet und derart dicht aneinandergereiht, dass die Produkteinheiten 1 für die nachfolgende Abpackung auf dem Transportband 2 dicht aneinander in annähernder Berührung angeordnet sind. Diese Produktaufnahmeelemente 6 sind dabei jeweils an den Durchmesser der zu verpackenden Tube 1 angepasst und werden bei unterschiedlichen Tubendurchmessern ausgewechselt.

Häufig werden die Tuben mit der Zuführungsvorrichtung 3 nicht lückenlos angeliefert (wie beispielsweise in Fig.3 dargestellt), weil fehlerhafte Tuben 1 vor der Übergabe verworfen werden oder die Produktaufnahmebehälter 5 der Zuführungsvorrichtung 3 nicht lückenlos mit den von der Produktionslinie kommenden Tuben 1 befüllt werden. Für die nachfolgende Abpackung der Tuben ist es jedoch notwendig, dass die Tuben lückenlos auf dem Transportband 2 platziert werden. Auch besteht insbesondere für leichte Kunststoff- oder Aluminiumtuben bei hohen Übergaberaten die Gefahr, dass die Tuben 1 bei zu schnellem Platzieren aus den Produktaufnahmeelementen 6 springen, was zu Lücken auf dem Transportband führen kann. Dieser Effekt kann aufgrund elektrostatischer Aufladung bei Kunststofftuben noch verstärkt sein.

Um auch bei hohen Übergaberaten eine lückenlose Übergabe der Tuben 1 von der Zuführungsvorrichtung 3 auf das Förderband 2 zu gewährleisten, weisen die Produktaufnahmeelemente 6 jeweils mehrere mittig in der wannenförmigen Aufnahme angeordnete Ansaugöffnungen 8 auf. Der Übergabebereich 7 ist derart dimensioniert, dass er sich über mehrere aufeinanderfolgende Produktaufnahmeelemente 6, 6', 6", 6"' erstreckt. Die Ansaugöffnungen 8 der Produktaufnahmeelemente 6, 6', 6", 6''' die sich im Übergabebereich 7 befinden, werden mittels einer Saugeinrichtung 9 mit einem Ansaugvakuum bedient, so dass eine übergebene Tube bei deren Landung in der wannenförmigen Aufnahme angesaugt wird. Dies führt einerseits dazu, dass ein die Tube 1 aufzunehmendes Produktaufnahmeelement 6 unabhängig von der exakten Positionierung im Übergabebereich, welche von der Zuführgeschwindigkeit und der Flugbahn der Tube bei der Übergabe abhängt, immer mit Ansaugvakuum versehen ist. Andererseits ist der Übergabebereich 7 genügend lang dimensioniert, dass eine übergebene Tube 1 entlang einer bestimmten Übergabestrecke mindestens solange in der wannenförmigen Aufnahme des Produktaufnahmeelements 6', 6", 6''' angesaugt wird, bis sie sich stabilisiert hat und mehrere nachfolgende Tuben 1 platziert sind. In jedem einzelnen Produktaufnahmeelement 6 sind die Ansaugöffnungen 8 in einer Linie der Tiefstlage angeordnet.

Die Übergabeeinrichtung weist ferner eine Übergabesteuerungseinheit (nicht gezeigt) auf, welche derart konfiguriert ist, dass sie die Geschwindigkeit des Transportbands an die Zuführungsgeschwindigkeit und die entsprechende Flugbahn der Tube 1 anpasst.
Um Produktlücken bei der Zuführung zu detektieren, weist die Zuführungsvorrichtung 3 vor dem Übergabebereich 7 einen Produkteinheitendetektor 11, z.B. in Form eines optischen Sensors, auf. Dieser ist mit der Übergabesteuerungseinheit verbunden. Wird eine Lücke in der Zuführung festgestellt, kann das Transportband bis zur nächsten Anlieferung einer Tube 1 verlangsamt oder bei mehreren aufeinanderfolgenden Lücken gestoppt werden.

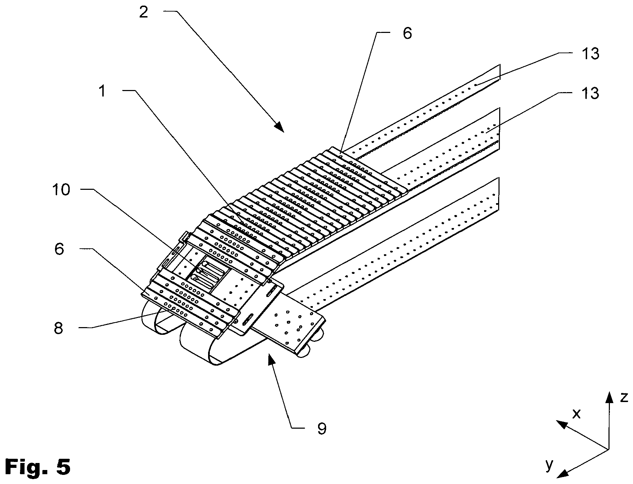

In **Fig. 4** und **Fig. 5** sind jeweils eine perspektivische Ansicht auf die Saugeinrichtung 9 der Übergabeeinrichtung gezeigt. Dabei wurden einige Produktaufnahmebehälter 5 und Produktaufnahmeelemente 6 weggelassen. In Fig. 5 wurde zudem die Zuführungsvorrichtung weggelassen.

Die Saugeinrichtung 9 ist im Übergabebereich 7 unter dem Transportband 2 angeordnet und weist in der gezeigt Ausführungsform mehrere längliche Saugöffnungen 10 auf, welche im Übergabebereich 7 die Ansaugöffnungen 8 der Produktaufnahmeelemente 6 mit Ansaugvakuum bedienen. Die Saugöffnungen 10 sind dabei derart ausgebildet und platziert, dass ein Produktaufnahmeelement 6, welches sich durch den Übergabebereich 7 bewegt, ständig mit Ansaugvakuum bedient ist.

Das Transportband 2 weist zwei voneinander beabstandete Endlosbänder 13 auf, auf welchen die Produktaufnahmeelemente 6 befestigt sind. Die Ansaugöffnungen 8 der Produktaufnahmeelemente 6 liegen dabei über der Lücke zwischen den beiden Endlosbändern. Die mindestens eine Saugöffnung 10 der Saugeinrichtung 9 ist im Übergabebereich 7 zwischen den beiden Endlosbändern 13 des Transportbands 2 angeordnet.

### Bezeichnungsliste

- 1: Hohlzylindrische Produkteinheiten / Tuben
- 2: Transportband
- 3: Zuführungsvorrichtung
- 4: Förderkette
- 5: Produktaufnahmebehälter
- 6...6''': Produktaufnahmeelement
- 7: Übergabebereich
- 8: Ansaugöffnung
- 9: Saugeinrichtung
- 10: Saugöffnung
- 11: Produkteinheitendetektor
- 12: Führungsblech
- 13: Endlosband
- 14: Abrollbereich
- A: Förderrichtung des Transportbands
- B: Förderrichtung der Förderkette

## Patentansprüche

1. Übergabeeinrichtung zur Übergabe länglicher, mindestens annähernd hohlzylindrischer Produkteinheiten (1) in Form von dünnwandigen Tuben auf eine Transporteinrichtung zur Belieferung einer Abpackeinheit mit lückenlos nebeneinander angeordneten Produkteinheiten (1), umfassend eine mit vorbestimmter Geschwindigkeit fördernde Zuführungsvorrichtung (3) zur Zuführung von aus einer Produktionsanlage angelieferten Produkteinheiten (1) und eine Transporteinrichtung mit einem Transportband (2), welches eine Vielzahl von Produktaufnahmeelementen (6) zur Weiterförderung der Produkteinheiten (1) aufweist;
wobei die Zuführungsvorrichtung (3) eine endlos umlaufende Förderkette (4) mit einer Vielzahl von Produktaufnahmebehältern (5) zur Aufnahme von einzelnen aus der Produktionsanlage angelieferten Produkteinheiten (1) aufweist;
wobei die Förderkette (4) der Zuführungseinrichtung (3) und das Transportband (2) der Transporteinrichtung in einem Übergabebereich (7) in die gleiche Förderrichtung (A, B) gleichmässig ansteigend und distanziert parallel zueinander verlaufen;
und wobei unterhalb der Förderkette (4) eine mit einem Ende bis in den Übergabebereich (7) reichende Produktführung (12) angeordnet ist; wobei die Übergabeeinrichtung eine Übergabesteuerungseinheit umfasst, welche derart konfiguriert ist, dass sie die Geschwindigkeit des Transportbands (2) an eine vorbestimmte Fördergeschwindigkeit der Zuführungsvorrichtung (3) anpasst, so dass eine zu übergebende Produkteinheit (1) nach der Abgabe am Ende der Produktführung (4) exakt auf dem in Förderrichtung (A) ersten freien Produktaufnahmeelement (6) landet;
**dadurch gekennzeichnet, dass**
die Übergabeeinrichtung eine Saugeinrichtung (9) zur Herstellung eines Ansaugvakuums umfasst, wobei zur Übergabe einer von der Zuführungsvorrichtung (3) angelieferten Produkteinheit (1) auf das Transportband (2) mehrere sich im Übergabebereich (7) der Übergabeeinrichtung befindliche Produktaufnahmeelemente (6 ... 6''') mit dem Ansaugvakuum der Saugeinrichtung (9) bedienbar sind, so dass die zu übergebende Produkteinheit (1) durch das Ansaugvakuum jeweils während der Landung und Weiterförderung im Übergabebereich (7) im Produktaufnahmeelement (6 ... 6"') gehalten und stabilisiert wird und dass die Produktaufnahmeelemente (6) des Transportbands (2) jeweils mindestens eine Ansaugöffnung (8) aufweisen, die jeweils mit dem Ansaugvakuum der Saugeinrichtung (9) bedienbar ist, und dass das Transportband (2) zwei voneinander beabstandete Endlosbänder (13) aufweist, auf welchen die Produktaufnahmeelemente (6) befestigt sind, wobei die Ansaugöffnungen (8) der Produktaufnahmeelemente (6) über der Lücke zwischen den beiden Endlosbändern angeordnet sind.

2. Übergabeeinrichtung nach Anspruch 1, **dadurch gekennzeichnet, dass** die Übergabeeinrichtung einen Produkteinheitendetektor (11) umfasst, der an der Zuführungsvorrichtung (3) in Förderrichtung (B) vor dem Übergabebereich (7) angeordnet ist, um das Vorhandensein einer Produkteinheit (1) in einem Produktaufnahmebehälter (5) festzustellen, und der mit der Übergabesteuerungseinheit verbunden ist, um bei Nicht-Vorhandensein einer Produkteinheit (1) die Geschwindigkeit des Transportbands (2) zu reduzieren.

3. Übergabeeinrichtung nach einem der vorhergehenden Ansprüche, **dadurch gekennzeichnet, dass** mehrere Ansaugöffnungen (8) im Wesentlichen mittig entlang dem Produktaufnahmeelement (6) angeordnet sind.

4. Übergabeeinrichtung nach einem der Ansprüche 1 oder 3, **dadurch gekennzeichnet, dass** die Saugeinrichtung (9) mindestens eine im Übergabebereich (7) angeordnete Saugöffnung (10) aufweist, mit welcher die mindestens eine Ansaugöffnung (8) oder die mehreren Ansaugöffnungen (8) der sich im Übergabebereich (7) befindlichen Produktaufnahmeelemente (6) mit Ansaugvakuum bedienbar sind.

5. Übergabeeinrichtung nach Anspruch 4, **dadurch gekennzeichnet, dass** die mindestens eine Saugöffnung (10) der Saugeinrichtung (9) im Übergabebereich (7) zwischen den beiden Endlosbändern (13) des Transportbands (2) angeordnet ist.

## Claims

1. Transfer device for the transfer of elongated, at least approximately hollow-cylindrical product units (1) in the form of thin-walled tubes to a transport device for supplying a packaging unit with said product units arranged side by side without any gaps, the device comprising:
a supply device (3), which conveys at a predetermined speed, for the supply of product units (1) delivered from a production line, and a transport device with a conveyor belt (2) that comprises a plurality of product receiving elements (6) for the onward conveyance of the product units (1);
wherein the supply device (3) comprises an endless conveyor chain (4) with a plurality of product receiving containers (5) for receiving individual product units (1) supplied from the production line;
wherein the conveyor chain (4) of the supply device (3) and the conveyor belt (2) of the transport device run in the same direction of conveyance (A, B) in a transfer region (7), gradually rising and parallel to each other at a distance;
and wherein underneath the conveyor chain (4) a product guidance (12) is arranged, the one end of which extends all the way to the transfer region (7);
wherein the transfer device comprises a transfer control unit, which is configured in such a manner that it adjusts the speed of the conveyor belt (2) to a predetermined conveyance speed of the supply device (3) so that a product unit (1) to be transferred, after having been delivered at the end of the product guidance (4), lands precisely on the first free product receiving element (6) in the direction of conveyance (A);
**characterized in that**
the transfer device comprises a suction device (9) for producing a suction vacuum, wherein for the transfer of a product unit (1), which has been delivered by the supply device (3), to the conveyor belt (2) several product receiving elements (6,..., 6''') that are located in the transfer region (7) of the transfer device can be operated with the suction vacuum of the suction device (9) so that the product unit (1) to be transferred is held and stabilized in the transfer region (7) in the product receiving element (6 ... 6''') by means of the suction vacuum both during landing and during onwards transfer, and **in that** the product reception elements (6) of the conveyor belt (2) each comprise a suction intake opening (8), which can in each case be operated with the suction vacuum of the suction device (9), and **in that** the conveyor belt (2) comprises two spaced-apart endless belts (13) to which the product receiving elements (6) are attached, wherein the suction intake openings (8) of the product receiving elements (6) are arranged above the gap between the two endless belts.

2. Transfer device according to claim 1, **characterized in that** the transfer device comprises a product unit detector (11) which is arranged on the supply device (3) in the direction of conveyance (B) upstream of the transfer region (7), in order to detect the presence of a product unit (1) in a product receiving container (5), and the detector is connected to the transfer control unit in order to reduce the speed of the conveyor belt (2) in the case of the non-presence of a product unit (1).

3. Transfer device according to one of the preceding claims, **characterized in that** several suction intake openings (8) are arranged essentially in the middle along the product receiving element (6).

4. Transfer device according to one of claims 1 or 3, **characterized in that** the suction device (9) comprises at least one suction opening (10) arranged in the transfer region (7), by means of which suction opening the at least one suction intake opening (8) or the multiple suction intake openings (8) of the product receiving elements (6) located in the transfer region (7) can be operated with a suction vacuum.

5. Transfer device according to claim 4, **characterized in that** the at least one suction opening (10) of the suction device (9) is arranged in the transfer region (7) between the two endless belts (13) of the conveyor belt (2).

## Revendications

1. Dispositif de transfert pour le transfert d'unités de produits (1) allongées, au moins approximativement cylindriques creuses sous la forme de tubes à mince paroi sur un dispositif de transport pour le changement d'une unité d'emballage avec des unités de produits (1) disposées sans intervalles l'une à côté de l'autre, comprenant un dispositif d'alimentation (3) progressant avec une vitesse prédéterminée pour l'amenée d'unités de produits (1) fournies à partir d'une installation de production et un dispositif de transport avec une bande transporteuse (2), qui présente une pluralité d'éléments de réception de produits (6) pour la transmission des unités de produits (1); dans lequel le dispositif d'alimentation (3) présente une chaîne transporteuse (4) tournant sans fin avec une multiplicité de récipients de réception de produits (5) destinés à recevoir des unités de produits(1) individuelles fournies à partir de l'installation de production; dans lequel la chaîne transporteuse (4) du dispositif d'alimentation (3) et la bande transporteuse (2) du dispositif de transport circulent dans une zone de transfert (7) dans la même direction de transport (A, B) avec une pente uniforme et parallèlement à distance l'une de l'autre; et dans lequel un guide de produits (12) pénétrant avec une extrémité jusque dans la zone de transfert (7) est disposé en dessous de la chaîne transporteuse (4); dans lequel le dispositif de transfert comprend une unité de commende de transfert, qui est configurée de telle manière qu'elle adapte la vitesse de la bande transporteuse (2) à une vitesse de transport prédéterminée du dispositif d'alimentation (3), de telle manière qu'une unité de produit (1) à transférer atterrisse exactement sur le premier élément de réception de produit (6) libre dans la direction de transport (A) après la cession à l'extrémité du guide de produit (4); **caractérisé en ce que** le dispositif de transfert comprend une dispositif d'aspiration (9) pour la production d'un vide d'aspiration, dans lequel, pour le transfert d'une unité de produit (1) fournie par le dispositif d'alimentation (3) sur la bande transporteuse (2), plusieurs éléments de réception de produits (6 ... 6''') se trouvant dans la zone de transfert (7) du dispositif de transfert peuvent être commandés avec le vide d'aspiration du dispositif d'aspiration (9), de telle manière que l'unité de produit (1) à transférer soit maintenue et stabilisée dans l'élément de réception de produit (6 ... 6''') par le vide d'aspiration respectivement pendant l'atterrissage et la transmission dans la zone de transfert (7) et **en ce que** les éléments de réception de produits (6) de la bande transporteuse (2) présentent respectivement au moins une orifice d'aspiration (8), qui peut être commandé respectivement avec le vide d'aspiration du dispositif d'aspiration (9), et **en ce que** la bande transporteuse (2) présente deux bandes sans fin (13) espacées l'une de l'autre, sur lesquelles les éléments de réception de produits (6) sont fixés, dans lequel les orifices d'aspiration (8) des éléments de réception de produits (6) sont disposés au-dessus de l'intervalle entre les deux bandes sans fin.

2. Dispositif de transfert selon la revendication 1, **caractérisé en ce que** le dispositif de transfert comprend un détecteur d'unité de produit (11), qui est disposé sur le dispositif d'alimentation (3) avant la zone de transfert (7) dans la direction de transport (B), afin de constater la présence d'une unité de
produit (1) dans un récipient de réception de produit (5) et qui est relié à l'unité de commande de transfert afin de réduire la vitesse de la bande transporteuse (2) en cas d'absence d'une unité de produit (1).

3. Dispositif de transfert selon l'une des revendications précédentes, **caractérisé en ce que** plusieurs orifices d'aspiration (8) sont disposés essentiellement au milieu le long de l'élément de réception de produit (6).

4. Dispositif de transfert selon une des revendications 1 ou 3, **caractérisé en ce que** le dispositif d'aspiration (9) présente au moins un orifice d'aspiration (10) disposé dans la zone de transfert (7), avec lequel ledit au moins un orifice d'aspiration (8) ou les multiples orifices d'aspiration (8) des éléments de réception de produits (6) se trouvant dans la zone de transfert (7) peuvent être commandés avec le vide d'aspiration.

5. Dispositif de transfert selon la revendication 4, **caractérisé en ce que** ledit au moins un orifice d'aspiration (10) du dispositif d'aspiration (9) est disposé dans la zone de transfert (7) entre les deux bandes sans fin (13) de la bande transporteuse (2).
